# EUROPEAN PATENT APPLICATION

(11) **EP 1 962 035 A2**
(43) Date of publication of application: **27.08.2008**
(21) Application number: 07120695.7
(22) Date of filing: 14.11.2007
(51) Int. Cl.: F25B 30/02, F24D 3/18

(54) **Water-cooled type air conditioner and method for controlling the same**

(30) Priority: 24.02.2007 KR 20070018761
(71) Applicant: Samsung Electronics Co., Ltd., Suwon-si, Gyeonggi-do 442-743 (KR)
(72) Inventor: Jung, Gyoo Ha, No. 541-1202, Baekseolmaeul-seongji Apt., Gyeonggi-do (KR); Jeong, Dong Woon, Dongnbaekjigu-chodangmaeul-koaroo Apt., Gyeonggi-do (KR)
(74) Representative: Grünecker, Kinkeldey, Stockmair & Schwanhäusser Anwaltssozietät

(57) **Abstract**

Disclosed are a water-cooled type air conditioner and a method for controlling the same. The method includes determining whether or not the temperature of water supplied to a heating system (34) or a hot sanitary water supplying system (37) via a condenser (12), for achieving heat exchange between water and a refrigerant, is lower than a reference temperature; and converting a portion of the refrigerant, condensed by the condenser, into a gas phase and transmitting the refrigerant in the gas phase to a compressor (11) without passing through an evaporator (15), when it is determined that the temperature of the water is lower than the reference temperature.

## Description

### BACKGROUND OF THE INVENTION

### 1. Field of the Invention

The present invention relates to a water-cooling type air conditioner and a method for controlling the same, and more particularly, to a water-cooling type air conditioner and a method for controlling the same, in which the temperature of heating water or hot sanitary water is raised even at a severely cold region.

### 2. Description of the Related Art

Generally, water-cooling type air conditioners are apparatuses, which perform heat exchange between water supplied to a water supply pipe, installed in a condenser instead of a blowing fan, and a refrigerant flowing along a refrigerant pipe. Korean Patent Laid-open Publication No. 10-2005-0046844 discloses a water-cooling type air conditioner, in which water flowing from a storage tank enters a water-cooling type condenser, passes through a cooling water circulation part so as to heat exchange with a refrigerant flowing along the cooling water circulation part, and then is returned to the inside of the storage tank.

Further, another water-cooling type air conditioner having a structure improved from that of the water-cooling type air conditioner disclosed in the above Patent has been developed. Such a water-cooling type air conditioner is installed for the main purpose of heating a room, and uses water, heated by heat exchange with a refrigerant via a water-cooling type condenser, as heating water or hot sanitary water. That is, the improved water-cooling type air conditioner includes a compressor, a water-cooling type condenser, an evaporator, and an expansion device, as disclosed in the above Patent, which are installed in an outdoor unit, and a heating pipe, which is installed on the floor or the wall of an indoor space. Then, the water heated by the water-cooling type condenser flows along the heating pipe, thus heating the indoor space.

However, the above conventional water-cooling type air conditioners are disadvantageous in that when an outdoor air temperature is lowered, a heating capacity is deteriorated and the rise in the temperature of hot sanitary water is limited. When the outdoor air temperature is lowered, the density of a refrigerant flowing along a refrigerant pipe installed in the outdoor unit is decreased, and the mass of the refrigerant in a refrigerant flow is decreased. Consequently, the water-cooling type air conditioners have a reduced heat exchange capacity, and thus the heating capacity is reduced or the hot sanitary water cannot be raised to a high temperature.

Here, a method for increasing the pressure at the side of an outlet of the compressor so as to raise the temperature of the heating water or the hot sanitary is proposed. When the pressure at the side of the outlet of the compressor is increased, the compression ratio of the compressor is excessively increased, and thus the compressor is overloaded and has a shortened life span. When the outdoor air temperature is low, the refrigerant in a liquid phase in the evaporator cannot be sufficiently evaporated, and thus the pressure at the side of an inlet of the compressor becomes relatively low. On the other hand, when the pressure at the outlet of the compressor is increased so as to raise the temperature of the heating water or the hot sanitary water, the compression ratio is abnormally increased and then the compressor is overloaded. Accordingly, the method for increasing the compression capacity of the compressor so as to solve the above problem is not employed.

### SUMMARY OF THE INVENTION

Therefore, one aspect of the invention is to provide a water-cooling type air conditioner and a method for controlling the same, in which the temperature of heating water or hot sanitary water can be raised even when an outdoor air temperature is lowered.

In accordance with one aspect, the present invention provides a method for controlling a water-cooling type air conditioner comprising determining whether or not the temperature of water supplied to a heating system or a hot sanitary water supplying system via a condenser, for achieving heat exchange between water and a refrigerant, is lower than a reference temperature; and converting a portion of the refrigerant, condensed by the condenser, into a gas phase and transmitting the refrigerant in the gas phase to a compressor without passing through an evaporator, when it is determined that the temperature of the water is lower than the reference temperature.

The portion of the refrigerant, condensed by the condenser, may be converted into the refrigerant in the gas phase by adjusting the opening degree of an electric expansion valve installed between the condenser and the evaporator.

The refrigerant in the gas phase may be transmitted to the compressor by opening an injection valve installed in an injection pipe connecting a gas-liquid separator, installed between the electric expansion valve and the evaporator, and the compressor.

In accordance with another aspect, the present invention provides a water-cooling type air conditioner comprising a compressor for compressing a refrigerant, evaporated by heat exchange with outdoor air in an evaporator; a condenser for condensing the refrigerant, discharged from the compressor, into a liquid phase by heat exchange with water; a heating or hot sanitary water supplying system using water heated via the condenser; a second electric expansion valve for converting the refrigerant in the liquid phase, discharged from the condenser, into a gas-liquid mixed phase; a gas-liquid separator for separating the refrigerant in the gas-liquid mixed phase into the refrigerant in the gas phase and the refrigerant in the liquid phase; a first electric expansion valve for expanding the refrigerant in the liquid phase, discharged from the gas-liquid separator, by decompression and transmitting the refrigerant to the evaporator; and an injection valve installed in an injection pipe for transmitting the refrigerant in the gas phase, discharged from the gas-liquid separator, to the compressor.

The injection pipe may be connected to a compression chamber of the compressor or a suction pipe of the compressor.

The water-cooling type air conditioner may further comprise a water temperature sensor for measuring the temperature of the water supplied to the heating or hot sanitary water supplying system via the condenser; and a microcomputer for turning on the injection valve so as to transmit the refrigerant in the gas phase to the compressor, when the temperature of the water measured by the water temperature sensor is lower than a reference temperature.

The condenser and the evaporator may be installed in an outdoor unit, and the heating system may be installed in an indoor space.

### BRIEF DESCRIPTION OF THE DRAWINGS

These and/or other aspects and advantages of the invention will become apparent and more readily appreciated from the following description of the embodiments, taken in conjunction with the accompanying drawings in which:
FIG. 1 is a schematic view illustrating a refrigerant flow and a hot water flow in a water-cooling type air conditioner in accordance with an embodiment of the present invention;
FIG. 2 is a block diagram of the water-cooling type air conditioner in accordance with the embodiment of the present invention; and
FIG. 3 is a flow chart for illustrating a method for controlling the water-cooling type air conditioner in accordance with the embodiment of the present invention.

### DETAILED DESCRIPTION OF THE PREFERRED EMBODIMENTS

Reference will now be made in detail to the embodiments of the present invention, an example of which is illustrated in the accompanying drawings, wherein like reference numerals refer to like elements throughout. The embodiments are described below to explain the present invention by referring to the annexed drawings.

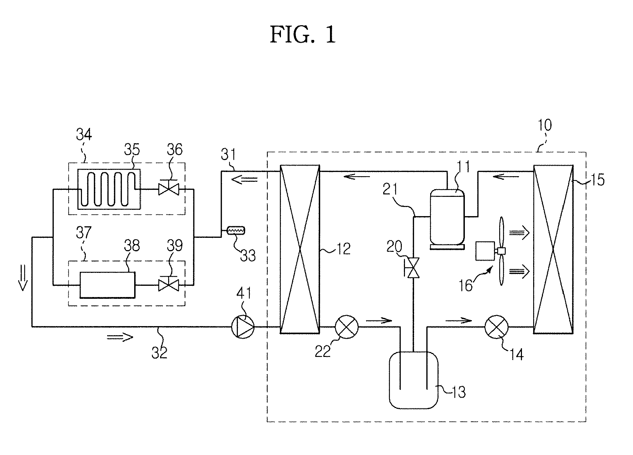

As shown in FIG. 1, a water-cooling type air conditioner in accordance with an embodiment of the present invention includes an outdoor unit 10, a heating system 34 and a hot sanitary water supplying system 37, and a supply pipe 32 and a discharge pipe 31 for connecting the outdoor unit 10 to the heating system 34 and the hot sanitary water supplying system 37.

A circulation pump 41, which pumps water of the heating system 34 and the hot sanitary water supplying system 37 to the outdoor unit 10, is installed in the supply pipe 32, and a water temperature sensor 33, which measures the temperature of water flowing from the outdoor unit 10 to the heating system 34 and the hot sanitary water supplying system 37, is installed in the discharge pipe 31.

The outdoor unit 10 includes a compressor 11, which compresses a refrigerant in a gas phase, a condenser 12, which achieves heat exchange between the refrigerant in the gas phase transmitted from the compressor 11 and water flowing from the heating system 34 and the hot sanitary water supplying system 37 so as to convert the refrigerant in the gas phase into a liquid phase, and a second electric expansion valve 22, which converts the refrigerant in the liquid phase into a gas-liquid mixed phase.

The outdoor unit 10 further includes a gas-liquid separator 13, which separates the refrigerant in the gas-liquid mixed phase, obtained by the second electric valve 22, into the refrigerant in the gas phase and the refrigerant in the liquid phase, a first electric expansion valve 14, which expands the refrigerant in the liquid phase, discharged from the gas-liquid separator 13, by decompression, an evaporator 15, which achieves heat exchange between the refrigerant in the liquid phase, transmitted from the first electric expansion valve 14, and outdoor air so as to convert the refrigerant in the liquid phase into the gas phase, and an evaporator fan 16, which blows air to the evaporator 15.

An injection pipe 21, which supplies the refrigerant in the gas phase from the gas-liquid separator 13 to the compressor 11, is connected between the gas-liquid separator 13 and the compressor 11, and an injection valve 20 is installed in the injection pipe 21. The injection pipe 21 is connected to a compression chamber (not shown) of the compressor 11, or a suction pipe of the compressor 11. The refrigerant flowing from the gas-liquid separator 13 to the compressor 11 via the injection pipe 21 has a higher pressure than that of the refrigerant inhaled from the evaporator 15 to the compressor 11, and thus has a larger mass than that of the refrigerant inhaled from the evaporator 15 to the compressor 11.

The heating system 34 includes a heating pipe 35 constructed on the floor or the wall of an indoor space, and a heating valve 36 for allowing water to flow from the condenser 12 to the heating pipe 35 or shutting out the water. The hot sanitary water supplying system 37 includes a hot sanitary water supplying tub 38 for storing water, and a hot sanitary water supplying valve 39 for allowing water to flow to the hot sanitary water supplying tub 38 or shutting out the water. The hot sanitary water supplying tub 38 is connected to the discharge pipe 31 and the supply pipe 32. Thus, the water, passed through the condenser 12, is supplied to the hot sanitary water supplying tub 38 via the discharge pipe 31, and the water, stored in the hot sanitary water supplying tub 38, flows to the condenser 12 via the supply pipe 32. The hot sanitary water supplying tub 38 may not be directly connected to the discharge pipe 31 and the supply pipe 32, but a pipe, along which hot sanitary water flows, may be installed in the hot sanitary water supplying tub 38 so as to heat the water in the hot sanitary water supplying tub 38.

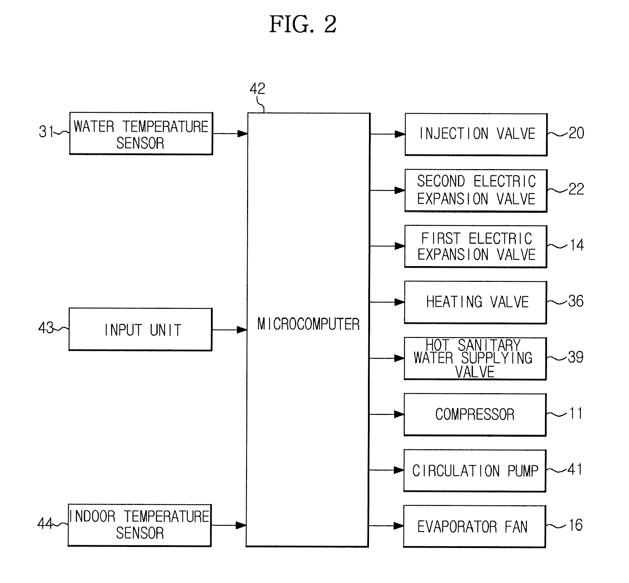

In addition to the components illustrated in FIG. 1, the water-cooling type air conditioner in accordance with the embodiment of the present invention may further include, as shown in FIG. 2, an input unit 43 having a heating button (not shown) for allowing a user to input heating instructions, a heating temperature dial (not shown) for setting a heating temperature, and a hot sanitary water supply button (not shown) for allowing the user to input hot sanitary water supplying instructions, an indoor temperature sensor 44 for measuring an indoor temperature, and a microcomputer 42 for controlling the operation of the components, such as the second electric expansion valve 22, the injection valve 20, etc., of the water-cooling type air conditioner.

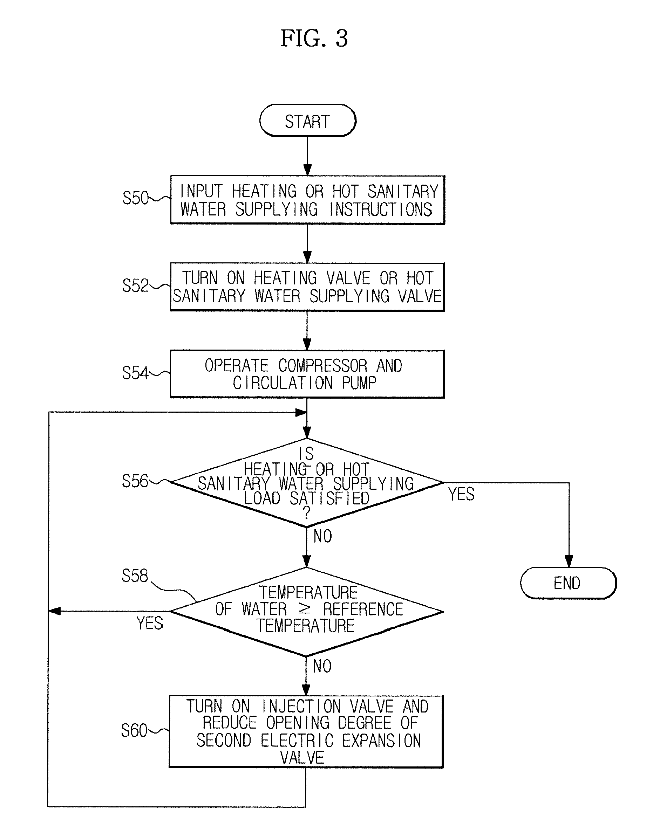

Hereinafter, with reference to FIG. 3, a method for controlling the water-cooling type air conditioner in accordance with the embodiment of the present invention will be described.

When an outdoor air temperature is lowered and thus the heating of an indoor space is required, a user inputs heating instructions by pressing the heating button of the input unit 43 and sets a target temperature by turning the heating temperature dial. Further, when the supply of hot sanitary water is required, the user inputs hot sanitary water supplying instructions by pressing the hot sanitary water supply button of the input unit 43 (S50).

When the heating or the hot sanitary water supplying instructions are inputted, the microcomputer 42 turns on the heating valve 36 or the hot sanitary water supplying valve 39 (S52). Then, the microcomputer 42 operates the compressor 11 and the circulation pump 41 (S54). Here, the microcomputer 42 completely opens the second electric expansion valve 22 so as not to affect the phase of the refrigerant, and turns off the injection valve 20 so as to prevent the refrigerant in the gas phase from being transmitted from the gas-liquid separator 13 to the compressor 11.

When the compressor 11 is operated, the refrigerant discharged from the compressor 11 is heat exchanged with water in the condenser 12, thus being condensed into a liquid phase. Then, the refrigerant in the liquid phase is expanded by decompression in the first electric expansion valve 14, and is transmitted to the evaporator 15. Thereafter, the refrigerant is heat exchanged with outdoor air in the evaporator 15, thus being converted into a gas phase.

When the circulation pump 41 is operated under the condition that the heating valve 36 or the hot sanitary water supplying valve 39 is turned on, the water in the heating pipe 35 or the hot sanitary water supplying tub 38 passes through the supply pipe 32, the condenser 12, and the discharge pipe 31, and is circulated into the heating pipe 35 or the water supplying tub 38. Thereby, the temperature of the water flowing to the heating pipe 35 or the hot sanitary water supplying tub 38 is gradually raised.

While operating the compressor 11, the microcomputer 42 determines whether or not a heating load or a hot sanitary water supplying load is satisfied (S56). The microcomputer 42 determines that the heating load is satisfied, when the indoor temperature reaches the target temperature set by the user. Accordingly, the microcomputer 42 compares the indoor temperature, sensed by the indoor temperature sensor 44, with the target temperature, and determines whether or not the heating load is satisfied from a result of the comparison. Further, the microcomputer 42 determines that the hot sanitary water supplying load is satisfied, when the user withdraws the hot sanitary water supplying instructions by pressing again the hot sanitary water supplying button.

When the heating load or the hot sanitary water supplying load is satisfied, a cycle of the method is terminated. On the other hand, when the heating load or the hot sanitary water supplying load is not satisfied, the microcomputer 42 determines whether or not the water temperature, i.e., the temperature of the water flowing from the condenser 12 to the heating pipe 35 or the hot sanitary water supplying water tub 38, sensed by the water temperature sensor 33 is not lower than a reference temperature (S58). Here, the reference temperature is the lowest temperature, at which the heating and the hot sanitary water supplying can be normally performed, (for example, a temperature of 65°C), and it is preferable that a proper reference temperature is set by various experiments carried out by water-cooling type air conditioner manufacturers.

As a result of the determination, when the temperature of the water flowing to the heating pipe 35 or the hot sanitary water supplying water tub 38 is not lower than the reference temperature, the microcomputer 42 determines that the heating or the hot sanitary water supplying can be normally carried out, and thus the cycle is returned to the step S56. On the other hand, when the temperature of the water flowing to the heating pipe 35 or the hot sanitary water supplying water tub 38 is lower than the reference temperature, the microcomputer 42 determines that the heating or the hot sanitary water supplying cannot be normally carried out, and thus reduces the opening degree of the second electric expansion valve 22 and turns on the injection valve 20 (S60).

The reason why the temperature of the water, which is heat exchanged with the refrigerant in the condenser 12 and flows to the heating pipe 35 or the hot sanitary water supplying tub 38, does not reach the reference temperature, although the compressor 11 is normally operated to transmit the refrigerant in the gas phase to the condenser 12, is that the excessively low outdoor air temperature reduces the mass of the refrigerant in the refrigerant flow and thus reduces the amount of the refrigerant flowing in the condenser 12 so that the heat exchange capacity of the condenser 12 is lowered.

When the opening degree of the second electric expansion valve 22 is reduced, a portion of the refrigerant in the liquid phase discharged from the condenser 12 is converted into a gas phase, and then the refrigerant in a gas-liquid mixed phase flows into the gas-liquid separator 13. Here, the opening degree of the second electric expansion valve 22 may be set to different values according to the outdoor air temperature, or be set to a specific value (for example, 40%), and it is preferable that the opening degree of the second electric expansion valve 22 is set by proper experiments carried out by water-cooling type air conditioner manufacturers.

The gas-liquid separator 13 separates the refrigerant in the gas-liquid mixed phase into a gas phase and a liquid phase. Then, the refrigerant in the liquid phase is expanded by decompression in the first electric expansion valve 14, and is transmitted to the evaporator 15. Further, the refrigerant in the gas phase passes through the injection pipe 21, and is transmitted to the compression chamber or the suction pipe of the compressor 11. The refrigerant in the gas phase, which is transmitted from the gas-liquid separator 13 directly to the compressor 11, has a higher pressure than that of the refrigerant in the gas phase, which is transmitted from the evaporator 15 to the compressor 11, and thus has a larger mass than that of the refrigerant in the gas phase, which is transmitted from the evaporator 15 to the compressor 11.

Accordingly, the amount of the refrigerant transmitted from the compressor 11 to the condenser 12 is increased, and the heat exchange capacity of the condenser 12 when the injection valve 20 is turned on is higher than that of the condenser 12 when the injection valve 20 is turned off. Thus, the temperature of the water flowing from the condenser 12 to the heating pipe 35 or the hot sanitary water supplying tub 38 is further raised.

In case that the injection pipe 21 is not connected to the compression chamber of the compressor 11 but is connected to the suction pipe of the compressor 11, the pressure at the side of the inlet of the compressor 11 is increased compared with the conventional water-cooling type air conditioner Then, although the pressure at the side of the outlet of the compressor 11 is increased so as to raise the temperature of the water flowing to the heating pipe 35 or the hot sanitary water supplying tub 38, the compressor 11 can be operated at a low compression ratio compared with the conventional water-cooling type air conditioner, and thus the life span of the compressor 11 is not shortened. Thus, a method for increasing the pressure at the side of the outlet of the compressor 11 so as to raise the temperature of the water flowing to the heating pipe 35 or the hot sanitary water supplying tub 38 when an outdoor air temperature is lowered may be employed.

As apparent from the above description, the present invention provides a water-cooling type air conditioner and a method for controlling the same, in which the heating of an indoor space or the supply of hot sanitary water is normally achieved even at a severely cold region.

Further, in the water-cooling type air conditioner of the present invention and the method for controlling the air conditioner, even when an outdoor air temperature is lowered, a compressor is not overloaded while normally achieving the heating of the indoor space or the supply of the hot sanitary water.

Although embodiments of the invention have been shown and described, it would be appreciated by those skilled in the art that changes may be made in these embodiments without departing from the principles and spirit of the invention, the scope of which is defined in the claims and their equivalents.

## Claims

1. A method for controlling a water-cooling type air conditioner comprising:
determining whether or not the temperature of water supplied to a heating system or a hot sanitary water supplying system via a condenser, for achieving heat exchange between water and a refrigerant, is lower than a reference temperature; and
converting a portion of the refrigerant, condensed by the condenser, into a gas phase and transmitting the refrigerant in the gas phase to a compressor without passing through an evaporator, when it is determined that the temperature of the water is lower than the reference temperature.

2. The method according to claim 1, wherein the portion of the refrigerant, condensed by the condenser, is converted into the gas phase by adjusting the opening degree of an electric expansion valve installed between the condenser and the evaporator.

3. The method according to claim 2, wherein the refrigerant in the gas phase is transmitted to the compressor by opening an injection valve installed in an injection pipe connecting a gas-liquid separator, installed between the electric expansion valve and the evaporator, and the compressor.

4. A water-cooling type air conditioner comprising:
a compressor for compressing a refrigerant, evaporated by heat exchange with outdoor air in an evaporator;
a condenser for condensing the refrigerant, discharged from the compressor, into a liquid phase by heat exchange with water;
a heating or hot sanitary water supplying system using water heated via the condenser;
a second electric expansion valve for converting the refrigerant in the liquid phase, discharged from the condenser, into a gas-liquid mixed phase;
a gas-liquid separator for separating the refrigerant in the gas-liquid mixed phase into the refrigerant in the gas phase and the refrigerant in the liquid phase;
a first electric expansion valve for expanding the refrigerant in the liquid phase, discharged from the gas-liquid separator, by decompression and transmitting the refrigerant to the evaporator; and
an injection valve installed in an injection pipe for transmitting the refrigerant in the gas phase, discharged from the gas-liquid separator, to the compressor.

5. The water-cooling type air conditioner according to claim 4, wherein the injection pipe is connected to a compression chamber of the compressor or a suction pipe of the compressor.

6. The water-cooling type air conditioner according to claim 4, further comprising:
a water temperature sensor for measuring the temperature of the water supplied to the heating or hot sanitary water supplying system via the condenser; and
a microcomputer for turning on the injection valve so as to transmit the refrigerant in the gas phase to the compressor, when the temperature of the water measured by the water temperature sensor is lower than a reference temperature.

7. The water-cooling type air conditioner according to claim 4, wherein the condenser and the evaporator are installed in an outdoor unit, and the heating system is installed in an indoor space.
